# EUROPÄISCHE PATENTANMELDUNG

(11) **EP 4 047 430 A1**
(43) Veröffentlichungstag der Anmeldung: **24.08.2022**
(21) Anmeldenummer: 21157562.6
(22) Anmeldetag: 17.02.2021
(51) Int. Cl.: G05B 19/418, H04L 29/08

(54) **ANZEIGEGERÄT IN DER PROZESSAUTOMATION**

(71) Anmelder: VEGA Grieshaber KG, 77709 Wolfach (DE)
(72) Erfinder: GARCIA, Juan, 77781 Biberach (DE); HÖLL, Ralf, 79822 Titisee-Neustadt (DE)
(74) Vertreter: Maiwald Patent- und Rechtsanwaltsgesellschaft mbH

(57) **Zusammenfassung**

Die Erfindung betrifft ein Anzeigegerät (100) für die Anzeige von Daten in einem Ethernet-Netzwerk (150) der Prozessautomatisierung mit einer spezifizierten physikalischen Schicht und einem Netzwerkprotokoll oder mehreren unterschiedlichen Netzwerkprotokollen der höheren Schichten, wobei das Anzeigegerät (100) eingerichtet ist, eines oder mehrere Teilnehmergeräte (102) des Netzwerks (150) zu erfassen, und Messwerte des einen oder der mehreren Teilnehmergeräte (102) anzuzeigen.

## Beschreibung

### Gebiet der Erfindung

Die Erfindung betrifft ein Anzeigegerät in einem Zweidraht-Ethernet-Netzwerk in der Prozessautomation, einen Switch, ein Prozessautomationsnetzwerk, das ein solches Anzeigegerät aufweist, und eine Verwendung eines solchen Anzeigegeräts.

### Hintergrund der Erfindung

Geräte in der Prozessautomation wie Sensoren, Steuergeräte, Aktuatoren, Anzeigegeräte, etc. kommunizieren üblicherweise über einen Standard wie den Feldbus, in der Prozessautomation typischerweise als Foundation Fieldbus ausgeprägt, oder den Profibus, in der Prozessautomation typischerweise als Profibus PA ausgeprägt. Anzeigegeräte können über den Profibus Messwerte anderer an diesem Bus angeschlossener Teilnehmergeräte anzeigen. Welches Teilnehmergerät als Profibus-Slave implementierte Feldgerät zu visualisieren ist, wird per Adressierung mit individuellen Profibus Adressen, zum Beispiel mittels DIP-Switch oder mittels Software eingestellt. Für die Übertragung digitaler Signale kann weiterhin eine Ethernet-Verbindung verwendet werden.

Die bisherige Adressierung damit die Erfassung von Daten der Teilnehmergeräte in einem Prozessautomationsnetzwerk zur Anzeige deren Daten ist jedoch umständlich und begrenzt.

### Offenbarung der Erfindung

Aufgabe der Erfindung ist es daher, Anzeigegeräte in einem Netzwerk, beispielsweise einem Ethernet-Netzwerk, der Prozessautomation zu verbessern.

Die Aufgabe wird durch die Gegenstände der unabhängigen Patentansprüche gelöst.

Vorteilhafte Ausführungsformen sind Gegenstand der abhängigen Ansprüche, der folgenden Beschreibung, sowie der Figuren.

Die beschriebenen Ausführungsformen betreffen in ähnlicher Weise das Anzeigegerät in einem Netzwerk der Prozessautomatisierung, den Field Switch, das Prozessautomationsnetzwerk, und die Verwendung eines solchen Anzeigegeräts. Synergieeffekte können sich aus verschiedenen Kombinationen der Ausführungsformen ergeben, obwohl sie möglicherweise nicht im Detail beschrieben werden.

Gemäß einem ersten Aspekt wird ein Anzeigegerät für die Anzeige von Teilnehmergeräte-Daten in einem Zweidraht-Ethernet-Netzwerk der Prozessautomatisierung mit einer spezifizierten physikalischen Schicht des Zweidraht-Ethernet-Netzwerks und einem Netzwerkprotokoll oder mehreren unterschiedlichen Netzwerkprotokollen der höheren Schichten bereitgestellt. Das Anzeigegerät ist mit dem Zweidraht-Ethernet-Netzwerk verbunden und ist eingerichtet, ein oder mehrere Teilnehmergeräte des Netzwerks zu erfassen, und Daten der Teilnehmergeräte anzuzeigen.

Das Zweidraht-Ethernet-Netzwerk hat insbesondere die Eigenschaft, dass sowohl Strom als auch Daten über das Zweidraht-Kabel übertragen werden können. Somit kann z.B. das gesamte Zweidraht-Ethernet-Netzwerk über einen Leistungsswitch mit Strom versorgt werden. Der Leistungsswitch bildet den Übergang zu einem herkömmlichen Vierdraht-Ethernet, an dem mehrere solche Leistungsswitches angeschlossen sein können. Alle an einem Leistungsswitch angeschlossenen Field Switches und wiederum alle an diese Field Switches angeschlossenen Teilnehmergerät definieren ein Zweidraht-Ethernet-Netzwerk. Der Field Switch ist hierbei eigensicher. Das heißt, er versorgt die Geräte des Zweidraht-Ethernet-Netzwerks mit maximal so viel Strom wie benötigt. Auch in einem Fehlerfall wird kein höherer Strom geliefert.

Das Zweidraht-Ethernet-Netzwerk weist ein spezifiziertes Protokoll auf und ein oder die mehrere unterschiedliche Netzwerkprotokolle der höheren Schichten, die über dem für diese Netzwerkprotokolle spezifizierten Protokoll der physikalischen Schicht, z.B. eine APL-(Advanced Physical Layer)-Schicht liegt. Sind mehrere miteinander verbundene Zweidraht-Ethernet-Netzwerke in einem Gesamtnetzwerk vorhanden, weisen diese Netze z.B. die gleiche, spezifizierte Schicht auf, können aber unterschiedliche Netzwerkprotokolle der höheren Schichten aufweisen. Die Netzwerkprotokolle der höheren Schichten des OSI-Modells sind beispielsweise Ethernet-Protokolle wie Profinet, Ethernet/IP, HART-IP, EtherCAT, OPC-UA, etc. Das Anzeigegerät kann prinzipiell alle Teilnehmergeräte in dem Zweidraht-Ethernet-Netzwerk erfassen, ohne dass ihm die Adressen der Teilnehmergeräte in dem Netzwerk vorher bekannt sein müssen oder eine Teilnehmergeräte-Adresse spezifiziert werden muss.

In dieser Offenbarung wird anstelle von "Anzeigegerät" gleichwertig auch der Begriff "Anzeige" verwendet.

Gemäß einer Ausführungsform ist das Anzeigegerät ein eigenständiges, d.h. autarkes "stand-alone"-Anzeigegerät, das direkt an einen Field Switch des Zweidraht-Ethernet-Netzwerks angeschlossen ist, oder es ist in einen Field Switch, d.h. beispielsweise einem Vor-Ort-Gateway, integriert.

Der Begriff "Field Switch" ist dem Fachmann bekannt und bezeichnet einen aus der Netzwerktechnik bekannten Switch, der als "Netzwerkweiche" übersetzt werden kann. "Field" ist ein Begriff der Prozessautomation und kann entsprechend der Feldgeräte auch hier als "Feld" übersetzt werden. In dieser Offenbarung kann der Switch auch Protokolle der höheren Netzwerkschichten verarbeiten und gemäß einigen Ausführungsformen auch eine Protokollwandlung durchführen.

Als autarke "stand-alone"-Anzeige verhält sich das Anzeigegerät wie ein Teilnehmergerät im Netzwerk. Das Anzeigegerät kann in dieser Weise an beliebiger Stelle im Zweidraht-Ethernet-Netzwerk angeordnet werden. Ein geeigneter Aufschaltort aus topologischer Sicht in diesem Netzwerk für die eigenständige Anzeige wäre die Punkt-zu-Punkt-Verbindung nach einem Field-Switch im sogenannten "Spur"-Bereich des Ethernet-Netzwerks, dessen Ausgänge jeweils eine Leitungslänge von bis zu 200 m haben können. Aus Sicht der Position wäre ein geeigneter Einbauort in der Anlage eine gut sichtbare und erkennbare Position, die einfach von einem Menschen betrachtet werden kann. Als Kombinationsgerät kann die Anzeige auch alternativ im Field-Switch (Gateway im Feld) integriert sein. Dann findet man die Anzeige zentral am Aufbauort der Field-Switch-Geräte. Das sind meist zugängliche Bereiche in denen eine Anzeige ebenfalls gut, z.B. zur bequemen Ablesung der Daten, platziert ist.

Ein geeigneter Aufbaubereich der autarken Anzeige oder der integrierten Field-Switch-Anzeigegerät ist im Feld, nahe der Applikation, die sich in vielen Fällen auch in explosionsgefährdeten Bereichen bis mindestens zur Ex-Zone 1 befinden kann. Das Anzeigegerät kann hierbei entweder selbst die Ex-Zone 2- und 1-Anforderungen erfüllen oder Teilnehmergeräte unter Ex-Zone 2, 1 und 0 erkennen und deren Messwerte anzeigen. Ein Einbau des Anzeigegeräts oder des Field-Switch mit integrierter Anzeige direkt in Ex-Zone 0 ist zwar ungewöhnlich, aber möglich.

Dadurch wird ermöglicht, dass das Anzeigegerät einerseits nahe der Applikation platziert werden kann, um eine Vor-Ort-Visualisierung von o.g. Informationen zu erhalten, die dem vor-Ort-Techniker eine direkte Rückmeldung bzw. auch Sicherheit in Bezug auf die Messung durch zeitnahes Visualisieren der Information ohne weitere Hilfsmittel bzw. Ethernet-basierte Kommunikationsgeräte ermöglicht, aber andererseits dem Techniker auch Daten und Meldungen von entfernten Teilnehmergeräten anzeigt.

Teilnehmergeräte sind hierbei beispielsweise Sensoren, Aktuatoren wie Ventile, Pumpen, Motoren, Steuergeräte, etc., oder auch weitere Anzeigegeräte. Die Geräte sind vorzugsweise Zweileiter-Ethernet-Geräte, die auch gemäß Ex (Explosiv)-Anforderungen spezifiziert und im Netzwerk eingesetzt sein können. Sensoren sind z.B. ein Füllstandsensor, ein Grenzstandsensor, ein Drucksensor, ein Sensor der während eines Prozesses eine Dichte oder eine Zusammensetzung bzw. Mischung eines Stoffes misst.

Teilnehmergeräte-Daten können neben Messwerten bzw. Prozesswerten auch Geräte-Identifikationsinformationen, Diagnosedaten und -meldungen, Statusinformationen, Grenzwerte und Angaben über die Teilnehmergeräte sein, die das Anzeigegerät erfasst und anzeigt. Weiterhin kann eine Darstellung berechneter Werte wie z.B. Summen, Differenz, Durchfluss, skalierte Werte, etc. sowie Trendbeobachtungen z.B. durch Anzeigen von Messwerten über die Zeit grafisch angezeigt werden.

Gemäß einer Ausführungsform ist das Anzeigegerät ein APL-Anzeigegerät und die spezifizierte physikalische Schicht eine APL-Übertragungsschicht. Somit wird ein APLbasiertes Ethernet-System gebildet. Das Anzeigegerät kann somit ein Anzeigegerät für APL-Netzwerke sein. APL ist in IEEE 802.3cg (10BASE-T1L) standardisiert und ist sowohl für einfache als auch komplexe Sensoren mit Zweileiter-Speisung anwendbar. APL erlaubt gleichzeitig die elektrische Speisung sowie die Kommunikation über den Zweidraht der Zweidraht-Ethernet-Geräte und ist für Ex-Applikationen geeignet (z.B. Eigensicherheit nach IEC 60079-11). Die möglichen Leitungslängen eines APL-Netzwerks sind an die Anforderungen der Prozessautomation angepasst und damit deutlich länger als herkömmliche Ethernet-Netzwerke mit anderer physikalischer Schicht.

Gemäß einer Ausführungsform ist das Zweidraht-Ethernet-Netzwerk ein Teilnetzwerk eines Ethernet-Netzwerks, das mehrere Zweidraht-Ethernet-Netzwerke als Teilnetzwerke aufweist, wobei innerhalb eines Zweidraht-Ethernet-Netzwerks das Protokoll der höheren Schichten gleich ist, die Teilnetzwerke über ein Ethernet Backbone miteinander verbunden sind, und wobei das Anzeigegerät weiterhin eingerichtet ist, ein Teilnehmergerät eines anderen Teilnetzwerks zu erfassen. Das Anzeigegerät kann somit Geräte des eigenen, z.B. APL-, Teilnetzwerks mit einem ersten höheren-Schichten-Protokoll erfassen als auch Geräte anderer, z.B. APL-, Teilnetzwerke mit einem zweiten oder dritten höheren-Schichten-Protokoll, wobei die Teilnetzwerke mit einem Ethernet Backbone verbunden sind, das nicht auf APL basiert.

Die typische Infrastruktur bei APL-Netzwerken wäre dabei wie folgt: Das Ethernet, das in der Warte verwendet wird und das sogenannte Backbone bildet, ist mit der Steuerung bzw. dem SPS oder Leitsystem verbunden und führt zu einem Leistungsswitch, dem so genannten APL-Power-Switch. Das Ethernet kann sich hierbei auch in der physikalischen Schicht zu der spezifizierten physikalischen APL- Schicht unterscheiden. Wie das Anzeige- und Steuergerät selbst, können auch die an das Netzwerk angeschlossenen Teilnehmergeräte insbesondere Zweileiter-Ethernet-Sensoren oder Aktoren, Stellungsregler, Steuergeräte etc. sein, die auch in einer explosionsgefährdeten Umgebung ("Ex") angeordnet sein können. Der separat mit elektrischer Leistung versorgte APL-Power-Switch generiert ein APL-Exe-Zweig, d.h. ein Zweig mit erhöhter Sicherheit, für den eine hohe elektrische Leistung zur Verfügung steht. Danach können beispielsweise bis in die Ex-Zone 1 angeordnete, unterschiedliche APL-Field-Switch-Module folgen, an denen je nach Kanalzahl 1 bis n APL Feldgeräte jeweils in Punkt-zu-Punkt-Verdrahtung angeschlossen werden können. Diese versorgen sich energietechnisch aus dem APL-System. An den APL-Field-Switch-Modulen können auch eigensichere Zweige, die auch "Spurs" genannt werden, mit eigensicheren (Exi) APL-Feldgeräten angeschlossen werden. Je nach Bedarf können an unterschiedlichen "Spurs" ein oder mehrere APL-Anzeigegeräte angeschlossen werden. Bei Eigensicherheit kann die Anwendung z.B. an das FISCO (Fieldbus Intrinsically Safe Concept) angelehnt sein, das bei Profibus und Foundation Fieldbus genutzt wird, und eine einfache Berechnung der eigensicheren Teilnehmer am Netzwerk ermöglicht.

Gemäß einer Ausführungsform ist das Anzeigegerät eingerichtet, Teilnehmergeräte gemäß einer Konfiguration anzuzeigen. Das heißt, die Liste der zu visualisierenden APL-Geräte kann vorher in der APL-Anzeige gezielt parametriert werden, so dass Daten von diesen konfigurierten Geräten angezeigt werden. Es sei hier darauf hingewiesen, dass diese Konfiguration unabhängig von der Erfassung der Geräte ist. Letztendlich werden durch diese Konfiguration diese angezeigt, die sich im Netzwerk befinden und erfasst worden sind, und aber gleichzeitig auch für die Visualisierung konfiguriert worden sind. Es kann allerdings auch eine Begrenzung der Erfassung durch einen konfigurierbaren, zulässigen Adressbereich stattfinden.

Die Konfiguration kann hierbei verschiedene Parameter aufweisen. Beispielsweise definiert ein Parameter, welche Teilnehmer angezeigt werden sollen. Werte können hierbei z.B. IP-Adressen oder andere Identifikationsinformationen sein. Ferner können Werte ein Teilnehmertyp sein, wie beispielsweise eine Feldgeräteart wie z.B. ein Sensor oder ein Sensortyp, ein Aktuator oder ein Aktuatortyp, eine Steuerung oder ein anderes Anzeigegerät. In einer Standardkonfiguration kann das Anzeigegerät die Messwerte eines lokalen Feldgeräts anzeigen, neben dem es angeordnet ist. Die Konfiguration für die Anzeige kann weiterhin auch Arten der Darstellung, wie z.B. Einheiten, oder Filter zur Art der anzuzeigenden Information enthalten. Hierunter fällt zum Beispiel, ob eine Zeitreihe dargestellt werden, ob die Zeitreihe eine prozessierte Zeitreihe ist, ob bzw. welche Diagnose-, Status-, und Warnmeldungen angezeigt werden sollen, etc.

Die APL-Anzeige kann als reine Anzeige für einen oder mehrere APL-Feldgeräte (Druck, Temperatur, Füllstand, Durchfluss, Stellungsregler, Ventilstellungen, usw.) oder auch als Anzeige für einen oder mehrere APL-Feldgeräte mit Zusatzfunktionalität bzw. Zusatzaufgaben operieren. Der APL Anzeigegerät visualisiert neben Erkennungsinformationen wie Messstellenname, IP-Adresse, etc. vor Allem die Messwerte von einzelnen oder allen APL-Teilnehmer, entweder als sequentielle Information, nacheinander dargestellt oder zusammengefasst. Zusätzlich werden Diagnoseinformationen von einzelnen oder allen APL-Teilnehmer (nacheinander), einzeln oder auch als Sammeldiagnoseinformation, z.B. als "Gesundheitsstatus", dargestellt. Dies kann an Standards angelehnt sein wie z.B. der Namurempfehlung NE 107. Diese Informationen können somit vor Ort, nahe der Applikation, visualisiert bzw. dargestellt werden. Der Anlagenbetreiber oder der Servicemitarbeiter vor Ort erhält unkompliziert und unmittelbar die benötigten Informationen.

Gemäß einer Ausführungsform ist das Anzeigegerät eingerichtet, unterschiedliche Netzwerkprotokolle umzusetzen. Das Anzeigegerät kann somit als Umsetzer von unterschiedlichen Protokollen von z.B. Profinet auf Ethernet/IP, etc. dienen. Dies kann insbesondere vorteilhaft sein, falls die APL-Feldgeräte nicht alle Protokolle unterstützen, so dass das Anzeigegerät zur Kommunikation mit diesem Feldgerät das Protokoll umsetzen kann.

Gemäß einer Ausführungsform weist das Anzeigegerät einen Webbrowser und/oder einen Open Platform Communications Unified Architecture (OPC UA)-Client auf, wobei der Webbrowser oder der OPC UA-Client eingerichtet ist, die Teilnehmergeräte zu erfassen, von den Teilnehmergeräten Daten, wie z.B. Kennungen, Messwerte, Status, etc. zu erfassen, und die Daten aufzubereiten und darzustellen. Der Webbrowser kann als Client implementiert sein und kann ferner eingerichtet sein, die bereits oben näher ausgeführte Konfiguration zur Visualisierung bestimmter Geräte oder auch eine Konfiguration zur Erfassung beispielsweise eines bestimmten Adressbereichs, der z.B. ein Teilnetzwerk repräsentiert, anzuwenden.

Durch einen OPC UA Client können Daten von anderen Geräten normiert abgerufen werden können. Das Anzeigegerät kann weiterhin, vorzugsweise zusätzlich zu dem OPC UA Client einen OPC UA-Server aufweisen, so dass beispielsweise eine übergeordnete Steuerung Daten von dem Anzeigegerät abrufen kann.

Gemäß einer Ausführungsform ist der Webbrowser eingerichtet, ein Broadcast-Signal zu senden, um die Teilnehmergeräte am Netzwerk zu erfassen. Hierbei erkennt der Webbrowser, automatisch via Broadcast alle angeschlossenen APL Feldgeräte, die entweder im eigenem APL-Netzwerk aber auch in benachbarten APL-Netzwerken der betreffenden Anlage zu finden sind. Hierzu ist der Webbrowser z.B. als Client konfiguriert, und sendet z.B. ein Request-Signal als Broadcastsignal, auf das die Teilnehmergeräte mit einem Response-Signal antworten. Das broadcast-Signal kann dabei ein Limited broadcast-Signal im eigenen (Sub-)Netz ohne Weiterleitung eines Routers sein oder ein sog. Directed Broadcast-Signal, das auch in weitere Netze oder Subnetze geleitet wird.

Gemäß einer Ausführungsform empfängt der Webbrowser ein Broadcast-Signal von einem Teilnehmergerät, um das Teilnehmergerät zu erfassen. In diesem Fall ist das Teilnehmergerät als Server konfiguriert. Beispielsweise sendet ein Prozessgerät ein Broadcast-Nachricht als Broadcast-Signal, so dass sie von jedem Anzeigegerät im Netzwerk angezeigt werden können.

Die APL Anzeige kann somit als Webbrowser arbeiten und automatisch via Broadcast alle angeschlossenen APL Feldgeräte erkennen, die entweder im eigenen APL-Netzwerk oder aber auch in benachbarten APL-Netzwerken der betreffenden Anlage zu finden sind. Die Kommunikation kann hierbei gemäß einem http-, https-, OPC-UA-, oder NAMUR-Protokoll erfolgen.

Gemäß einer Ausführungsform ist das Anzeigegerät eingerichtet, gemäß einer Konfiguration oder einer Steuerung eine zusätzliche Netzwerkverbindung freizuschalten. Die zusätzliche Netzwerkverbindung ist beispielsweise ein Datenkanal bzw. Kommunikationskanal nach "außen", das heißt zu einem aktiven oder bis zur Freischaltung der Datenleitung inaktiven Teilnetzwerks. Das Teilnetzwerk kann somit insbesondere auch ein Netzwerk sein, das über einen Switch oder das Internet mit dem Netzwerk, in dem das Anzeigegerät angeordnet ist, verbunden ist. Damit wird das Anzeigegerät insbesondere der Anforderung eines "zweiten Kommunikationskanals" der Chemie- und Petrochemie- und Pharmabranche Zusatzfunktionen gemäß der der NOA (NAMUR Open Architecture) gerecht.

Durch den weiteren Kommunikationskanal wird ein zentrales vor-Ort-Meldesystem gebildet, das via Email, Funktechnologien wie z.B. GSM, GPRS, UMTS, LTE, SMS, LoRa, WLAN, etc. Daten und Informationen gemäß z.B. der NOA -Empfehlung senden kann. Der zweite Kommunikationskanal kann beispielsweise über den Webbrowser hergestellt werden oder über eine weitere Einheit, wie zum Beispiel über eine Drahtlosverbindung wie WLAN, über die eine Internetverbindung möglich ist, eine Mobilfunkverbindung oder eine E-Mail-Verbindung, die drahtlos oder drahtgebunden, über den Webbrowser oder einen anderen Email-Client realisiert werden kann.

Als Vor-Ort-Meldesystem bzw. Vor-Ort-Visualisierung mit Farben nach NE 107 (NAMUR Empfehlung 107) bzw. eigener Farbendefinition vom Anlagenbetreiber einsetzbar.

Gemäß einer Ausführungsform weist das Anzeigegerät ein oder mehrere beispielsweise integrierte Relaisbausteine und/oder Transistorausgänge auf, die eingerichtet sind, ein Signal für eine Grenzwertmeldung, Grenzstandüberschreitung, Diagnosemeldeinformation, eine Sammelstörmeldung, eine Störmeldung, eine Notabschaltung, eine Vor-Ort-Pumpabschaltung auszugeben und/oder ein akustisches oder optisches Warngerät, wie z.B. eine Hupe oder ein Warnlicht zu schalten.

Gemäß einem Aspekt wird ein Switch bereitgestellt, der ein hierin beschriebenes Anzeigegerät aufweist.

Gemäß einem Aspekt wird ein Prozessautomationsnetzwerk bereitgestellt, das einen solchen Switch und / oder ein hierin beschriebenes Anzeigegerät aufweist.

Gemäß einer Ausführungsform besteht das Prozessautomationsnetzwerk mindestens ein Zweidraht-Ethernet-Teilnetzwerk aufweist und das Anzeigegerät in einem Zweidraht-Ethernet-Teilnetzwerk (110, 120) angeordnet ist, und wobei jedes Teilnetzwerk mindestens ein Teilnehmergerät aufweist. Die Teilnetzwerke sind beispielsweise APL-Netzwerke, die über einen Ethernet-Backbone miteinander verbunden sind. Die verschiedenen APL-Netzwerke der Anlage sind über das gemeinsame Ethernet, d.h. dem Backbone, in der Warte als ein Gesamt-IP-Adressraum zu sehen. Das verwendete Protokoll (z.B. Profinet, Ethernet/IP, HART-IP, EtherCAT, OPC-UA ...) ist hierbei in der Regel anlagenübergreifend das gleiche, kann aber in verschiedenen APL-Netzwerken unterschiedlich sein.

Gemäß einem Aspekt wird eine Verwendung eines hierin beschriebenen Anzeigegeräts in einem Prozessautomationsnetzwerk bereitgestellt.

Unter Prozessautomatisierung bzw. Prozessautomation im industriellen Umfeld kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren, Aktoren/Stellungsregler, etc. eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können. In gleicher Weise können Signale an Aktoren bzw. Stellungsregler von üblicherweise einer Leitwarte übermittelt werden. Bei Aktoren bzw. Stellungsregler ist die Wirkungsrichtung des Signals entgegengesetzt wie bei der Sensorik. Die Plattform, das APL-Netzwerk, bleibt das gleiche.

Die Konfiguration bzw. Einrichtung des Anzeigegeräts kann zumindest teilweise durch eine Software, ein Programm bzw. Computerprogramm, ein Programmelement, und/oder eine hartverdrahtete Logik gegeben sein. Das Programmelement kann hierbei ein Teil eines Computerprogramms sein, es kann jedoch auch ein ganzes Programm für sich sein. Beispielsweise kann das Programmelement verwendet werden, um ein bereits vorhandenes Computerprogramm zu aktualisieren, um zur vorliegenden Erfindung zu gelangen. Die programmierte Logik kann auf einem computerlesbaren Medium gespeichert sein, das als ein Speichermedium angesehen werden kann, wie beispielsweise ein USB-Stick, eine CD, eine DVD, ein Datenspeichergerät, eine Festplatte oder ein beliebiges anderes Speichermedium.

Bei dem Programmelement kann es sich um programmierte oder hartverdrahtete Logik oder eine Mischung davon handeln. Um das Programmelement auszuführen, kann die Recheneinheit einen Prozessor

Um die programmierte oder hartverdrahtete Logik in Effekt zu bringen, kann das Anpassungsmodul einen Prozessor, eine Mehrzweck-Zentraleinheit (CPU), eine Grafikverarbeitungseinheit (GPU), einen Mikrocontroller, einen Mikrocomputer, eine speicherprogrammierbare Steuerung (SPS), einen Prozessor mit reduziertem Befehlssatz (RISC-Prozessor), ein FPGA (Field Programmable Gate Array), eine digitale Signalverarbeitungseinrichtung (DSP), eine anwendungsspezifische integrierte Schaltung (ASIC) und/oder andere programmierbare Schaltungen oder Verarbeitungseinrichtungen, aufweisen.

Andere Variationen der offenbarten Ausführungsformen können vom Fachmann bei der Durchführung der beanspruchten Erfindung durch das Studium der Zeichnungen, der Offenbarung und der beigefügten Ansprüche verstanden und ausgeführt werden. In den Ansprüchen schließt das Wort "umfassend" andere Elemente oder Schritte nicht aus, und der unbestimmte Artikel "ein" oder "eine" schließt eine Vielzahl nicht aus. Ein einzelner Prozessor oder eine andere Einheit kann die Funktionen mehrerer Gegenstände oder Schritte erfüllen, die in den Ansprüchen aufgeführt sind. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann.

### Kurze Beschreibung der Figur

Im Folgenden werden Ausführungsbeispiele der Erfindung mit Bezug auf die beiliegenden Figuren detailliert beschrieben. Weder die Beschreibung noch die Figuren sollen als die Erfindung einschränkend ausgelegt werden. Hierbei zeigt

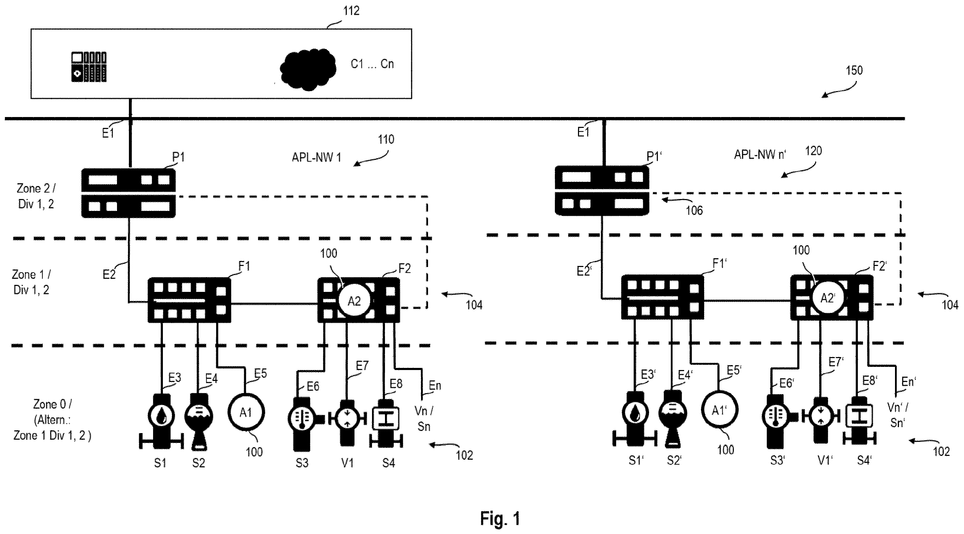

Fig. 1 ein Blockdiagramm eines Prozessautomationsnetzwerks gemäß einem Ausführungsbeispiel.

### Detaillierte Beschreibung der Figur

In Fig. 1 werden folgende Bezugszeichen verwendet:
- C1 ... Cn: Steuerungen wie zum Beispiel SPS, PLS, Cloud Applikationen, Asset Management Programme, Bedienprogramme ...
- E1: Ethernet Netzwerk (Office-/Schaltraumwarte-Bereich) auch Backbone genannt
- P1: APL Power Switch vom ersten APL-Netzwerk unterhalb vom Backbone
- P1': APL Power Switch vom "n"-ten APL-Netzwerk unterhalb vom Backbone
- E2: Ethernet-APL-Netzwerk vom ersten APL-Netzwerk
- E2': Ethernet-APL-Netzwerk vom "n"-ten APL-Netzwerk
- F1: APL-Field-Switch 1 vom ersten APL-Netzwerk
- F1': APL-Field-Switch 1 vom "n"-ten APL-Netzwerk
- F2: APL-Field-Switch 2 vom ersten APL-Netzwerk
- F2': APL-Field-Switch 2 vom "n"-ten APL-Netzwerk
- A1: APL-Anzeige 1 angeschlossen Punkt-zu-Punkt am Switch F1
- A1': APL-Anzeige 1' angeschlossen Punkt-zu-Punkt am Switch F1'
- A2: APL-Anzeige 2 integriert im APL-Field-Switch F2
- A2': APL-Anzeige 2' integriert im APL-Field-Switch F2'
- E3 ... En: Ethernet-APL-Punkt-zu-Punkt-Verbindungen zu den APL-Geräten im APL-Netzwerk 1
- E3' ... En': Ethernet-APL-Punkt-zu-Punkt-Verbindungen zu den APL-Geräten im APL-Netzwerk n'
- S1 ... Sn: Ethernet-APL-Geräte (Sensoren) im Netzwerk 1
- S1' ... Sn': Ethernet-APL-Geräte (Sensoren) im Netzwerk n'
- V1 ... Vn: Ethernet-APL-Geräte (Stellungsregler/Ventile) im Netzwerk 1
- V1' ... Vn': Ethernet-APL-Geräte (Stellungsregler/Ventile) im Netzwerk n'
- 100: Anzeigegerät(e)
- 102: Ethernet-APL-Gerät(e) (Teilnehmergeräte)
- 104: APL-Field-Switch(es)
- 106: APL Power Switch(es)
- 112: Steuersystem / Cloud Applikation
- 110: Teilnetzwerk APL-NW 1
- 120: Teilnetzwerk APL-NW n'
- 150: Ethernet-Netzwerk

Die Anzeigegeräte A1, A2, A1' und A2' werden unter dem Bezugszeichen 100 zusammengefasst, die APL-Field-Switches F1, F2, F1' und F2' unter dem Bezugszeichen 104, die APL Power Switches unter dem Bezugszeichen 106, und die Ethernet-APL-Geräte oder Teilnehmergeräte unter dem Bezugszeichen 102.

Durch die Unterstützung von Leitungslängen bis zu 1000 m bei 10 Mbit/s, zukünftig 100 Mbit/s in Vollduplex im Hauptzweig (unterhalb vom APL-Power-Switch auch "Trunk" genannt) und jeweils bis zu 200 m Unterzweige (unterhalb vom APL-Field-Switch auch "Spur" genannt), ist APL für die Anforderungen der Prozessautomation geeignet. Unterschiedliche Topologien, wie z.B. Ring, Linie, Stern, sind möglich. Weiterhin erleichtern ein standardisiertes PA-DIM (Process Automation Device Information Model) durch eine einheitliche, maschinenlesbare Semantik von Feldgeräten die Visualisierung unterschiedlicher APL-Feldgeräte unterschiedlicher Hersteller im APL-Anzeigegerät.

Die Erläuterungen bezüglich des Netzwerkes 110 gelten analog für das Netzwerk 120. Gezeigt wird ein Ethernet-Netzwerk bestehend aus einem "Office-Ethernet-Bereich" E1, dem sogenannten Backbone, an dem unterschiedliche Steuerungen (SPS/PLS), Scada, Parametrier- bzw. Bedienprogramme, Asset Management Programme oder auch Cloud Applikationen 112 angeschlossen sein können. Darunter sind unterhalb des APL-Power Switchs (P1, P1') ein oder mehrere APL-Netzwerke APL-NW 1, 110, ..., APL-NW n', 120 angeschlossen. Die Summe aller APL-Netzwerke APL-NW 1,..., APL-NW n' kann auch als APL-Netzwerkverbund, APL-Netzwerkumgebung oder Gesamtnetzwerk 150 betrachtet werden. Das APL-Netzwerk 110 beginnt mit dem APL-Power-Switch P1 der einen APL-Zweig mit hoher Leistung E2 aufbaut. An diesem APL-Zweig, der auch in erhöhter Sicherheit auslegbar ("Exe") ist, können mehrere APL-Field-Switches F1 ... Fn 104 angeschlossen sein. An diesen sind die eigentlichen APL-Feldgeräte 102, S1 ... Sn bzw. V1 ... Vn über die eigensicheren Punkt-zu-Punkt-Anbindungen E3 ... En angeschlossen. Anstatt eigensicher kann in nicht-Ex-Anlagen genanntes auch nicht eigensicher ausgelegt sein. S1 ... Sn stehen hierbei für APL-Sensoren, V1 ... Vn stehen für APL-Ventile bzw. APL-Stellungsregler. Eines dieser eigensicheren Punkt-zu-Punkt-Anbindungen, E5, kann beispielsweise zum Anschluss eines APL-Anzeigegeräts A1 verwendet werden. Das autark und eigenständig arbeitende APL-Anzeigegerät A1 nutzt ein eigenes Gehäuse, das auch vor Ort, in rauer Umgebung aufgebaut werden kann.

Alternativ kann das APL-Anzeigegerät A2 auch beispielsweise im APL-Field-Switch F2 integriert sein. Hier übernimmt dieser an einer zentralen Stelle die gleichen Aufgaben wie das autark und eigenständig arbeitende APL-Anzeigegerät A1, hat aber in dieser Ausprägung kein eigenes Gehäuse, sondern ist als Bestandteil bzw. als Teilfunktionalität des APL-Field-Switchs F2 zu sehen.

Entsprechend den APL-Anzeigegeräten A1 oder A2, können das APL-Anzeigegerät A1' und/oder A2' in benachbarten APL-Netzwerken n' eingesetzt werden. Eine Einschränkung auf eine bestimmte Anzahl von APL-Anzeigegeräten in einem APL-Netzwerkverbund APL-NW 1 ... APL-NW n' ist nicht notwendig.

Jedes beliebige APL-Anzeigegerät in diesem Beispiel A1, A2, A1' oder A2' kann Daten von beliebigen APL-Geräten im APL-Netzwerkverbund 1 ... n' anzeigen.

Die hier im Beispiel gezeigten APL-Anzeigegeräte A1, A2, A1' oder A2' werden auf Ziel-APL-Geräte parametriert, die im APL-Anzeigegerät dargestellt werden sollen. Dies kann über eine vor-Ort-Bedienung, vor-Ort-Schnittstelle, drahtlos (z.B. über Bluetooth und Bedienprogramm) oder über das Netzwerk und ein Bedienprogramm erfolgen, über das die gewünschten APL-Sensoren definiert werden können, die im APL-Anzeigegerät visualisiert werden sollen. Diese können eines oder mehrere der 1 ... n APL-Geräte, wie z.B. S1 ... Sn sowie V1... Vn sein. Ebenso kann eine drahtbasierte Schnittstelle wie ein USB-Kabel mit Sensorparametrierschnittstelle (z.B. I²C-Schnittstelle) und ein Bedienprogramm verwendet werden.

Die APL Anzeige A1, A2, A1' oder A2' arbeitet dabei als Webbrowser und erkennt automatisch via Broadcast alle angeschlossenen APL Feldgeräte S1 ... Sn sowie V1 ... Vn, die entweder im eigenen APL-Netzwerk "APL-NW 1, aber auch in benachbarten APL-Netzwerken APL-NW n' der betreffenden Ethernet-Gesamtanlage 150 zu finden sind. Das im Ethernet-Netzwerk (APL-Netzwerk und Backbone) 150 verwendete Protokoll (z.B. Profinet, Ethernet/IP, HART-IP, EtherCAT ...) ist hierbei in der Regel anlagenübergreifend das gleiche.

Die APL Anzeige A1, A2, A1' oder A2' visualisiert neben Erkennungsinformationen wie Messstellenname, IP-Adresse, etc. die Messwerte von einzelnen oder allen APL-Teilnehmern S1 ... Sn sowie V1 ... Vn entweder als sequentielle Information nacheinander dargestellt oder zusammengefasst bzw. verdichtet. Zusätzlich werden Diagnoseinformationen von einzelnen oder allen APL-Teilnehmer (nacheinander) einzeln oder auch als Sammeldiagnoseinformation dargestellt.

Bei Bedarf kann das APL-Anzeigegerät A1, A2, A1' oder A2' einen zusätzlichen Datenkanal nach "außen" im Sinne der NOA- (NAMUR Open Architecture) Anforderung eines "zweiten Kommunikationskanals" der Chemie und Petrochemie (NOA) etablieren. Damit wäre ein Hauptkanal (Kommunikationskanal 1) über die Ethernet-Struktur zum Austausch wesentlicher Daten wie Messwerte wie gehabt vorhanden als auch ein zweiter Datenkanal (Kommunikationskanal 2) der z.B. über eine Funkschnittstelle (GPS, GPRS, UMTS, LTE, 5G, LoRa, etc.) andere, zulässige oder gewünschte Daten an parallel vorhandene, übergeordnete Systeme (z.B. Cloud) weiterleitet.

Weiterhin kann das APL-Anzeigegerät A1, A2, A1' oder A2' auch einen vor Ort parametrierbaren Relaisbaustein oder Transistorausgang bzw. Relaisbausteine 1 ... n und/oder Transistorausgänge 1 ... n beinhalten. Dies dient zur Grenzwertmeldung, Sammelstörmeldung, Störmeldungen, Notabschaltung, Vor-Ort-Pumpabschaltung, Schalten von Warngeräten (Hupe, Warnlicht, etc.).

Ferner kann das APL-Anzeigegerät A1, A2, A1' oder A2' als lokales vor-Ort-Visualisierungssystem arbeiten.

Das APL-Anzeigegerät A1, A2, A1' oder A2' kann weiterhin als Protokollumsetzer unterschiedlicher Protokolle von z.B. Profinet auf Ethernet/IP arbeiten.

Bei Bedarf kann der APL-Anzeigegerät A1, A2, A1' oder A2' als vor-Ort-Meldesystem via Email, SMS, SIM-Karte, LoRa, Wlan, etc. im Sinne eines zweiten Kommunikationskanals (NOA) arbeiten, sowie als vor-Ort-Visualisierung mit Farben nach NAMUR Empfehlung NE107 bzw. eigener Farbendefinition vom Anlagenbetreiber dienen.

Die Zeichnung ist lediglich schematisch und nicht maßstabsgetreu. Grundsätzlich sind identische oder ähnliche Teile mit den gleichen Bezugszeichen versehen.

## Patentansprüche

1. Anzeigegerät (100) für die Anzeige von Teilnehmergerätedaten in einem Zweidraht-Ethernet-Netzwerk (110, 120) der Prozessautomatisierung mit einer spezifizierten physikalischen Schicht des Zweidraht-Ethernet-Netzwerks und einem Netzwerkprotokoll oder mehreren unterschiedlichen Netzwerkprotokollen der höheren Schichten, wobei das Anzeigegerät (100) mit dem Zweidraht-Ethernet-Netzwerk (110, 120) verbunden ist und eingerichtet ist, mindestens ein Teilnehmergerät (102) des Zweidraht-Ethernet-Netzwerks (110, 120) zu erfassen, und Daten des mindestens einen Teilnehmergeräts (102) anzuzeigen.

2. Anzeigegerät (100) nach Anspruch 1, wobei das Anzeigegerät (100) ein eigenständiges Anzeigegerät (100) ist, das direkt an einen Field Switch des Zweidraht-Ethernet-Netzwerks angeschlossen ist, oder in einen Field Switch (104) integriert ist.

3. Anzeigegerät (100) nach Anspruch 1 oder 2, wobei das Anzeigegerät (100) ein APL-Anzeigegerät ist und die spezifizierten physikalische Schicht eine APL-Übertragungsschicht ist.

4. Anzeigegerät (100) nach einem der vorhergehenden Ansprüche, wobei das Zweidraht-Ethernet-Netzwerk (110, 120) ein Teilnetzwerk eines Ethernet-Netzwerks (150) ist, das mehrere Zweidraht-Ethernet-Netzwerke (110, 120) als Teilnetzwerke aufweist;
wobei innerhalb eines Zweidraht-Ethernet-Netzwerks (110, 120) das Protokoll der höheren Schichten gleich ist;
die Teilnetzwerke (110, 120) über ein Ethernet Backbone miteinander verbunden sind; und
wobei das Anzeigegerät (100) weiterhin eingerichtet ist, ein Teilnehmergerät (102) eines anderen Zweidraht-Ethernet-Netzwerks zu erfassen.

5. Anzeigegerät (100) nach einem der vorhergehenden Ansprüche, wobei das Anzeigegerät (100) eingerichtet ist, ein Teilnehmergerät (102) gemäß einer Konfiguration anzuzeigen.

6. Anzeigegerät (100) nach einem der vorhergehenden Ansprüche, wobei das Anzeigegerät (100) eingerichtet ist, unterschiedliche Netzwerkprotokolle umzusetzen.

7. Anzeigegerät (100) nach einem der vorhergehenden Ansprüche, wobei das Anzeigegerät (100) einen Webbrowser und/oder einen Open Platform Communications Unified Architecture (OPC UA)-Client aufweist, wobei der Webbrowser oder der OPC UA-Client eingerichtet ist, das mindestens eine Teilnehmergerät (102) zu erfassen, Daten von dem mindestens einen Teilnehmergerät zu erfassen, und die Daten aufzubereiten und darzustellen.

8. Anzeigegerät (100) nach Anspruch 7, wobei der Webbrowser ein Broadcast-Signal sendet, um das mindestens eine Teilnehmergerät (102) zu erfassen.

9. Anzeigegerät (100) nach Anspruch 7 oder 8, wobei der Webbrowser ein Broadcast-Signal von einem Teilnehmergerät (102) empfängt, um das Teilnehmergerät (102) am Netzwerk zu erfassen.

10. Anzeigegerät (100) nach einem der vorhergehenden Ansprüche, wobei das Anzeigegerät (100) eingerichtet ist, gemäß einer Konfiguration oder einer Steuerung eine zusätzliche Netzwerkverbindung freizuschalten.

11. Anzeigegerät (100) nach einem der vorhergehenden Ansprüche, wobei das Anzeigegerät (100) ein oder mehrere Relaisbausteine und/oder Transistorausgänge aufweist, die eingerichtet sind, ein Signal für eine Grenzwertmeldung, Grenzstandüberschreitung, Diagnosemeldeinformation, eine Sammelstörmeldung, eine Störmeldung, eine Notabschaltung, eine Vor-Ort-Pumpabschaltung auszugeben und/oder ein akustisches oder optisches Warngerät zu schalten.

12. Field Switch (104), aufweisend ein Anzeigegerät (100) nach einem der vorhergehenden Ansprüche.

13. Prozessautomationsnetzwerk (150), aufweisend
ein Anzeigegerät (100) nach einem der der Ansprüche 1 bis 11 und / oder einen Field Switch (104) nach Anspruch 12.

14. Prozessautomationsnetzwerk (150) nach Anspruch 13, wobei das Prozessautomationsnetzwerk (150) mindestens ein Zweidraht-Ethernet-Teilnetzwerk (110, 120) aufweist und das Anzeigegerät (100) in einem Zweidraht-Ethernet-Teilnetzwerk (110, 120) angeordnet ist, und wobei jedes Teilnetzwerk (110, 120) mindestens ein Teilnehmergerät (102) aufweist.

15. Verwendung eines Anzeigegeräts (100) nach einem der Ansprüche 1-11 in einem Prozessautomationsnetzwerk (150) nach einem der Ansprüche 13 bis 14.
